# EUROPEAN PATENT APPLICATION

(11) **EP 1 392 041 A1**
(43) Date of publication of application: **25.02.2004**
(21) Application number: 02018667.2
(22) Date of filing: 20.08.2002
(51) Int. Cl.: H04M 3/54, H04M 7/00

(54) **Remote call pick up notification**

(71) Applicant: SIEMENS AKTIENGESELLSCHAFT, 80333 München (DE)
(72) Inventor: Kresnik, Robert, 2310 Slovenska Bistrica (SI)

(57) **Abstract**

A method for a location-independent provision of a notification to a terminal device (122) is proposed. The notification is generated in a first exchange (exch1), transported to a second exchange (exch2) by means of a TCAP procedure, and finally transmitted to the terminal device (122). The notification is encapsulated in a VPN (virtual private network) container, e.g. according to ITU-T Q.765. The VPN container can be freely transmitted over SS7 networks between TCAP instances. Thus, a remote terminal (122) can be provided with the notification via a local exchange. In particular, Centrex groups whose members are situated at different locations can be offered an enhanced Centrex functionality. For example, all members can be sent call pick up notification messages, independent of the exchange to which the individual member is connected.

## Description

The present invention relates to a method for a location-independent provision of a notification to a terminal device.

New developments in communications technology and networking have brought about major changes for the working environment in information-driven sectors of the economy.

An important point in case is the rise of teleworking. Teleworking has the benefits of saving office space and cutting down on commuting. Another important phenomenon is distributed or "virtual" working units or teams, which are more and more common in business and research. Employees situated at different locations are often grouped together within a single virtual unit to form a competence pool or to boost performance.

The transformation of working environments drives the development of new or enhanced services by the telecommunications industry. Distributed working units should be provided with the same service features as traditional working units where all members are co-located in one building.

The distributed working environments go along with outsourcing of telecommunication resources. The Centrex (central exchange) service provides the subscriber with PBX-like switching resources. The requisite switching equipment is located at the carrier side and is not the customer premises equipment as for PBX (private branch exchange) solutions.

A CTX (Centrex) group, i.e. a group of people to be provided with switching resources by a central exchange, can subscribe to a number of features to improve information handling within the group. One of these features is call pick up. A call at a local extension can be re-routed to a particular extension by off-hook at this particular extension and entering a code, e.g. *7. A prerequisite to the call pick up feature is the group's notification upon an incoming call at another extension. Usually, such a call pick up notification is provided via audio signal (ringing) or an indicator lamp or a display on the subscriber's terminal device.

Current Centrex services limits the call pick up feature to CTX group members served by the same exchange. This limitation relies on the fact that group members are located at same near location.

The objective of the present invention is to present a method for providing call notification messages to users independent of the location of the exchange that serves the individual user.

Transportation of call notification messages between exchanges via TCAP procedures is at the core of the present invention. Details of the TCAP (Transaction Capabilities Application Part) are laid out in the ITU-T recommendations
Q.771: Functional description of transaction capabilities
Q.772: Transaction capabilities information element definitions
Q.773: Transaction capabilities formats and encoding
Q.774: Transaction capabilities procedures, and
Q.775: Guidelines for using transaction capabilities.

The TCAP is applied in SS7 (Signalling System No. 7) networks. It provides functionality for signalling between SS7 nodes, whereby the signalling needs not involve a bearer.

According to the present invention, a notification is provided to a terminal device served by a remote exchange, i.e. the notification originates in an exchange different from the exchange, which connects to the terminal device. The notification message is generated in a first exchange, transported by means of a TCAP procedure to a second exchange, and transmitted from the second exchange to at least one terminal device. For example, the TC-UNI, TC-BEGIN, TC-CONTINUE and TC-END request primitives, which are used for signalling with TCAP, may be used as TCAP procedures for the transportation of the notification message.

The present invention allows to enhance telecommunications services with location-independent notification of service subscribers. The notification is not necessarily related to a bearer. Using a VPN (virtual private network) mechanism such as the one laid out in the recommendation ITU-T Q.765 allows for transportation of notification messages. The transportation of proprietary notification messages is possible, too. For example, a proprietary notification message may be generated in a PBX (private branch exchange) and consecutively transported across a PSTN (public switched telephone network) network. Thus, any PSTN subscriber may be provided with the notification, independent of which exchange he/she is connected to. Possible exchanges in-between the exchange where the notification message is generated and the exchange that serves the terminal device of the message's addressee will forward the notification in accordance with standard SS7 mechanisms.

For transmitting the notification message a facility information element of a facility message may be deployed. Facility messages are common with DSS1 (Digital Signalling System No.1) and H.323 signalling. The protocol specification ETSI EN 300 196-1 provides information on the use of facility messages and facility information elements for DSS1 signalling. Via facility messages the notification message may be transmitted to different types of terminal devices, e.g. analogue phones, digital phones and IP-based terminal devices, such as IP-phones.

The present method may be used for a call pick up notification or a notification about a parked call (i.e. a call put on hold to be picked up from another extension). The invention allows for a better integration of distributed working units who are grouped together in a single CTX group. Members of that CTX group can be notified about calls to other members who work at different locations and who use different access networks or access equipment.

Below the invention is described by way of example and with reference to figures.

Fig. 1 shows a scenario where members of a CTX group are assigned to different local exchanges.

Fig. 2 shows information related to CTX features as displayed on an Internet terminal device.

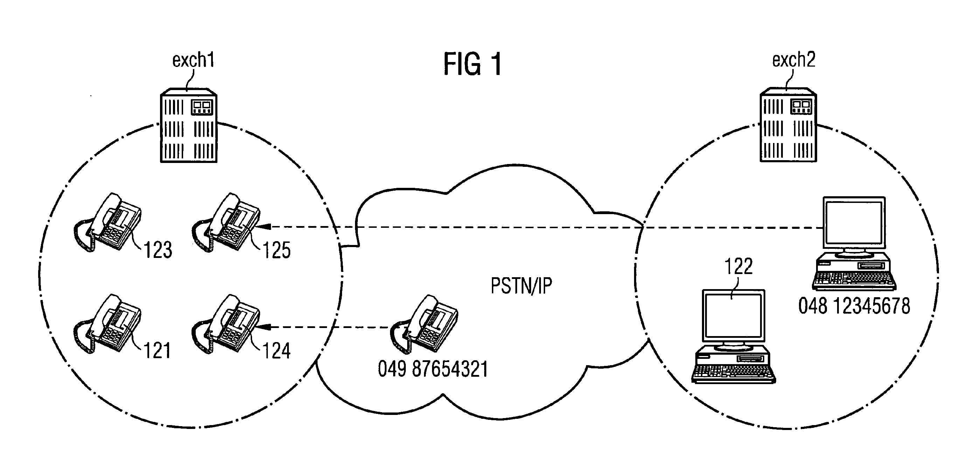

Fig. 1 presents a scenario where members of a CTX group are serviced by different local exchanges exch1 and exch2. The exchanges exch1 and exch2 are connected through a communication network such as a PSTN network or a PSTN/IP multimedia environment. A number of CTX members are connected via PSTN terminal devices 121, 123, 124, and 125 to a first exchange exch1. Another group member is connected via an Internet terminal device 122 to a second local exchange exch2. Two calls from terminal devices 049 87654321 and 048 12345678 to CTX members are indicated via arrows.

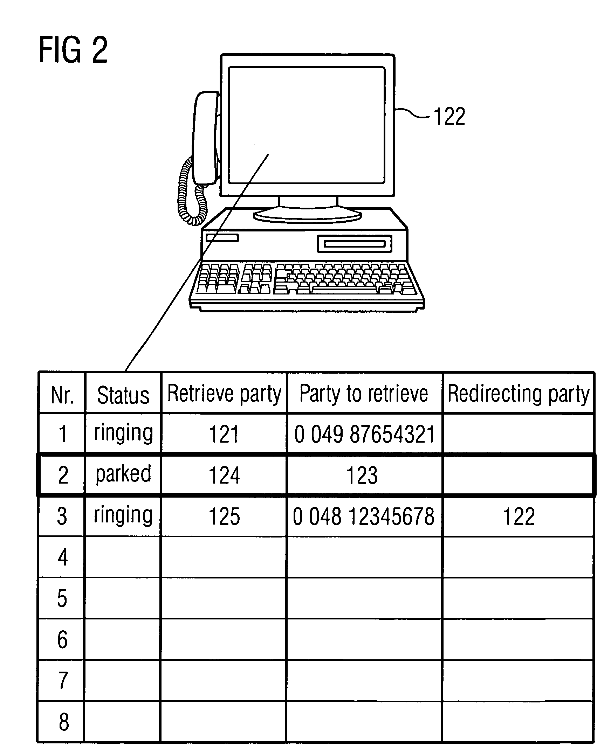

The invention allows for transmitting call pick up notifications triggered by calls to any one of the group members with PSTN terminal devices 121, 123, 124, and 125 and to the Internet terminal device 122. On the visual display of the Internet terminal device 122 status information for calls to other CTX group members are displayed (Fig. 2). Currently, three pieces of information are shown on the display: PSTN terminal device 121 is ringing. A call from terminal device 123 was parked on terminal device 124. Finally, the display shows that a ringing call at terminal device 125 was redirected from terminal device 122. These presented calls can be picked up from the Internet (H.323 or DSS1) terminal device 122.

According to the invention signalling messages are exchanged between the exchanges exch1 and exch2 for the Internet terminal device 122 to be notified about the call directed to the PSTN terminal device 125. The exchange exch1 is provided with functionality for identifying calls to be notified to the CTX group members. Upon reception of such a call a facility messages is created. Facility messages transport information about alerting calls via facility information elements (FAC-IE). The facility information element comprises items such as calling party number, called party number, redirecting party number (optional) and CTX name ID. Below examples for alerting call operations are given, which constitute facility information elements to be transported via facility messages to their destination:
CpuNotification (call pick up notification): Notification about an alerting call.
CpuNotificationEnd (call pick up notification end): This operation ends the process of notifying the alerting call. Usually, the corresponding facility information element is sent when the alerting call has been released, diverted or answered.
DistinctiveCallPickUp (distinctive call pick up): The facility information element is sent from the terminal to the local exchange. Via this operation a feature is invoked that causes alerting calls to be presented with the same call ID as the original call. The original call ID may be used for the selection of calls.
CpunInitStar (call pick up initialisation start): This facility information element is sent from the terminal to the local exchange to initialise the alerting call notification process.
CpunReset (call pick up notification reset): CpunReset is sent from the exchange to terminals and causes displays with information on alerting calls to be reset.

According to the invention the above facility information elements can also be used with remote terminals, i.e. alerting call notifications and other alerting call operations can be supplied to terminals that are serviced by different local exchanges.

In the course of call pick up notifications to remote terminals facility information elements are transmitted between exchanges. The transport is mediated by TCAP (transaction capabilities application part) procedures. ITU-T Recommendation Q.771 defines procedures (in ITU-T Q.771 primitive are presented that be used for these procedures) for communications or dialogues between nodes, such as TC-BEGIN, TC-CONTINUE and TC-END. The overall objective of Transaction Capabilities (TC) is to provide the means for the transfer of information between nodes, and to provide generic services to applications, while being independent of any of these. Generally, transmission of information is initiated via a TC-BEGIN primitive. Upon transmission of the TC-BEGIN primitive a TCAP transaction is established. Further information may be sent via TC-CONTINUE. TC-END discontinues the transmission. According to the invention TCAP messages are used for transport of facility information elements between exchanges. The primitives TC-BEGIN, TC-CONTINUE and TC-END each contain a user information parameter. User information corresponds to any information exchanged between two TC-Users (applications as specified in ITU-T Q.771). Its meaning depends on the Application Context Name that accompanies it or is in place during its use. The parameter Application Context Name is a reference to an explicitly defined set of the TC-User Application Service Elements (ASEs), related options and any other necessary information for the interworking of two applications (termed "TC-Users" in the ITU recommendations) during an instance of communication.

ITU-T Q.765.1 "Signalling System No. 7 - Application transport mechanism - Support of VPN applications with PSS1 (Private Network Q Reference Point Signalling System No. 1) information flows" proposes a connection oriented PSS1 ASE (COPSS1 ASE) for use with TCAP primitives. This COPSS1 ASE is responsible for the signalling aspects of the VPN (virtual private network) application for the support of PSS1 information flows and for preparing the information in the appropriate form that can be passed to the TC (Transaction Capabilities) for transportation.

In general, ITU-T Q.765.1 describes the extensions for the support of VPN applications over public Network Node Interfaces (NNI). This application is based on the Transaction Capability (TCAP) for signalling involving no bearer. In the preferred embodiment, TCAP procedures such as TC-BEGIN, TC-CONTINUE and TC-END are put to use for call pick up notification (cpun) signalling. A mechanism for transportation via a VPN container as described in ITU-T Q.765.1 may be used to transport Facility information elements between exchanges.

Facility information elements destined for the Internet terminal device 122 are first transmitted via the above TCAP procedures to the exchange exch2, which services the Internet terminal device 122. Exchange exch2 provides facility information elements to connected terminal devices such as device 122 analogously to the provision of locally generated facility information elements. The serviced terminal device may be IP based, ISDN based or an analogue device. For example, a mechanism for transmitting facility messages by means of the DSS1 protocol to ISDN subscriber is set out in ETSI 300 196-1 (Integrated Services Digital Network (ISDN); Generic functional protocol for the support of supplementary services; Digital Subscriber Signalling System No. 1 (DSS1) protocol; Part 1: Protocol specification) Chap. 8.3.2.4. IP terminals may be serviced via the H.323 protocol. Upon reception of the cpun message the alerting call is displayed on the display of the Internet terminal device 122. Upon activation of the pick-up feature, e.g. via hook-off and dialling of special access code or with click on particular display, the call destined for terminal device 125 is re-routed to terminal device 122.

## Claims

1. A method for a location-independent provision of a notification to a terminal device (122),
comprising
- generating said notification in a first exchange (exchl),
- transporting said notification message to a second exchange (exch2) by means of a TCAP procedure, and
- transmitting said notification message to said terminal device (122).

2. The method according to claim 1,
further comprising
- transmitting said notification message in a facility information element of a facility message.

3. The method according to claim 1 or 2,
further comprising
providing said notification message to a multitude of terminals (121, 122, 123, 124) served by at least two different exchanges (exch1, exch2).

4. The method according to one of the preceding claims, further comprising
using one of the TCAP primitives TC-BEGIN, TC-CONTINUE, and TC-END for transportation of said notification message.

5. The method according to one of the preceding claims, **characterised in that**
the notification message is a call pick up notification message or a notification message relating to a parked call.

6. The method according to one of the preceding claims, **characterised in that**
said notification message is transported via a VPN (virtual private network) container.

7. The method according to one of the preceding claims, **characterised in that**
said terminal device (125) is given by an analogue telephone, a digital telephone, or an IP based terminal device.

8. The method according to one of the preceding claims, **characterised in that**
- the notification message refers to a call destined for a member of a CTX group,
- the notification message is provided to all other members of said CTX group.
